# EUROPEAN PATENT APPLICATION

(11) **EP 4 753 002 A1**
(43) Date of publication of application: **03.06.2026**
(21) Application number: 24863155.8
(22) Date of filing: 03.09.2024
(51) Int. Cl.: H01M 10/056, H01M 10/052, H01M 10/0566, H01M 4/134, H01M 4/139

(54) **COMPOSITE MEMBRANE FOR ELECTROLYTE, COMPOSITE ELECTROLYTE, PREPARATION METHOD THEREOF, AND LITHIUM SECONDARY BATTERY INCLUDING SAME**

(30) Priority: 04.09.2023 KR 20230117195
(71) Applicant: SK On Co., Ltd., Seoul 03161 (KR)
(72) Inventor: LEE, Seung-Hwan, Daejeon 34124 (KR); PARK, Myung-Soo, Daejeon 34124 (KR); GO, Hyeon-Jin, Daejeon 34124 (KR); LEE, Han-Sol, Daejeon 34124 (KR)
(74) Representative: Prüfer & Partner mbB Patentanwälte · Rechtsanwälte
(86) International application number: PCT/KR2024/013247
(87) International publication number: WO 2025/053574

(57) **Abstract**

A composite membrane for an electrolyte according to an embodiment disclosed herein comprises an ionic conductive polymer and inorganic particles, wherein the ionic conductive polymer includes a polyurethane-based compound, and the composite membrane for an electrolyte has an elongation at break of 50% or more.

## Description

### Technical Field

The present disclosure relates to a composite membrane for an electrolyte, a composite electrolyte, a preparation method thereof, and a lithium secondary battery including the same.

### Background Art

Recently, as interest in environmental issues has grown, a lithium secondary battery having high discharge voltage and output stability has mainly been used as a power source for electric vehicles (EV) and the like, which may replace fossil fuel-based vehicles. However, a conventional lithium secondary battery to which a liquid electrolyte such as an organic solvent is applied may have problems such as risk of ignition due to electrolyte leakage, electrolyte decomposition due to an electrode reaction, and expansion of the battery therefrom. Accordingly, in order to solve the problems described above, research into a lithium secondary battery to which a solid state electrolyte is applied is actively proceeding.

### Summary of Invention

### Technical Problem

An aspect of the present disclosure is to provide a composite electrolyte having excellent ion conduction properties.

Another aspect of the present disclosure is to provide a composite electrolyte having improved mechanical properties.

Still another aspect of the present disclosure is to provide a lithium secondary battery having excellent performance.

### Solution to Problem

According to an aspect of the present disclosure, a composite membrane for an electrolyte includes: an ionic conductive polymer and inorganic particles, wherein the ionic conductive polymer includes a polyurethane-based compound, and the composite membrane for an electrolyte has an elongation at break of 50% or more.

The number of functional groups capable of hydrogen bonding per structural unit of the polyurethane-based compound may be 2 to 18.

The polyurethane-based compound may include a soft-segment and a hard-segment.

The soft-segment may include a structural unit represented by the following Chemical Formula 1:

[Chemical Formula 1] *-O-R¹-O-*

wherein R¹ is a divalent aliphatic organic group.

The hard-segment may include a structural unit represented by the following Chemical Formula 2:

[Chemical Formula 2] *-C(=O)(NR³)-R²-(NR⁴)C(=O)-*

wherein R² is an organic group including an aromatic ring, and
R³ and R⁴ are independently of each other hydrogen or a substituted or unsubstituted alkyl group having 1 to 5 carbon atoms.

The ionic conductive polymer may further include any one selected from a polyethylene oxide (PEO)-based compound, a polyvinylidene fluoride (PVDF)-based compound, a polymethyl methacrylate (PMMA)-based compound, and a combination thereof.

The inorganic particles may include any one selected from a garnet compound, a NASICON compound, a perovskite compound, and a combination thereof.

According to another aspect of the present disclosure, a composite electrolyte includes: the composite membrane for an electrolyte according to any one of the above embodiments; an acryl-based compound; and a liquid electrolyte.

The acryl-based compound may include a compound having 3 to 8 (meth)acryloyl groups per molecule.

The acryl-based compound may include any one selected from trimethylol propane ethoxylate triacrylate (TMPETA), trimethylol propane trimethacrylate (TMPTMA), trimethylol propane triacrylate (TMPTA), tetramethylol methane tetraacrylate (TMMTA), and a combination thereof.

The liquid electrolyte may include a lithium salt and a carbonate-based solvent.

A content of the ionic conductive polymer in the composite electrolyte may be 10 to 70 wt%.

A content of the inorganic particles in the composite electrolyte may be 1 to 20 wt%.

A weight ratio between the ionic conductive polymer and the inorganic particles in the composite electrolyte may be 1:1 to 30:1.

A content of the acryl-based compound in the composite electrolyte may be 1 to 10 wt%.

The composite electrolyte may be a free-standing film.

The composite electrolyte may have a thickness of 10 to 200 µm.

According to another aspect of the present disclosure, a preparation method of a composite electrolyte includes: preparing a slurry including an ionic conductive polymer, inorganic particles, and an organic solvent; applying the slurry to a substrate and then drying to form a composite membrane for an electrolyte; and mixing the composite membrane for an electrolyte with an acryl-based compound and a liquid electrolyte and then performing curing to form a composite electrolyte, wherein the ionic conductive polymer includes a polyurethane-based compound.

According to still another aspect of the present disclosure, a lithium secondary battery includes the composite electrolyte according to any one of the embodiments described above.

The lithium secondary battery may include a lithium metal anode (LMA).

### Advantageous Effects of Invention

According to an embodiment of the present disclosure, a composite electrolyte having improved ion conduction properties may be prepared with excellent processability.

According to another embodiment of the present disclosure, a composite electrolyte having improved mechanical properties may be prepared with excellent processability.

According to another embodiment of the present disclosure, an ignition risk due to electrolyte leakage inside a lithium secondary battery may be mitigated.

According to still another embodiment of the present disclosure, a lithium secondary battery having excellent performance may be provided.

### Brief Description of Drawings

FIG. 1 is drawings showing the forms of the composite membranes for an electrolyte according to Example 1 and Comparative Examples 1 to 3.
FIG. 2 is a drawing illustrating stress-strain curves obtained by measuring the composite membranes for an electrolyte according to Example 1 and Comparative Examples 1 to 3.
FIG. 3 is a drawing illustrating a stress-strain curve obtained by measuring the composite membrane for an electrolyte according to Example 1.
FIG. 4 is a drawing illustrating the results of measuring voltage over time in a charge/discharge process of lithium secondary batteries including the composite electrolytes according to Example 1 and Comparative Examples 1 to 3.
FIG. 5 is a drawing illustrating forms before/after liquid electrolyte impregnation of the composite membrane for an electrolyte according to Comparative Example 1.
FIG. 6 is drawings showing the results of post-lithium surface analysis and electrolyte layer check after charging/discharging lithium secondary batteries including the composite electrolytes according to Example 1 and Comparative Examples 1 to 3.

### Best Mode for Invention

In the present specification, a "polymer" may include an oligomer and may also include a copolymer with a homopolymer. The copolymer may include an alternating polymer, a block copolymer, a random copolymer, a branch copolymer, a crosslinked copolymer, or all of them.

In the present specification, "alkyl" is an organic radical derived from an aliphatic hydrocarbon by removal of one hydrogen, and may include both straight chain and branched chain forms. The alkyl may have 1 to 10 carbon atoms, specifically 1 to 7 carbon atoms, specifically 1 to 5 carbon atoms, or specifically 1 to 3 carbon atoms. The alkyl includes, as an example, methyl, ethyl, propyl, isopropyl, butyl, isobutyl, t-butyl, pentyl, hexyl, ethylhexyl, and the like, but is not limited thereto.

In the present specification, an aromatic ring may include a monocyclic or fused-cyclic system including appropriately 4 to 7, specifically 5 or 6 ring atoms, and may include even a form in which a plurality of aromatic rings are connected by a single bond or an alkyl group. As an example, the aromatic ring may include benzene, naphthalene, biphenyl, terphenyl, and the like, but is not limited thereto.

Hereinafter, "(meth)acryl" may be used in the meaning of including both "methacryl" or "acryl," unless otherwise particularly defined in the present specification.

In the present specification, a "polymer electrolyte" refers not only to an all-solid-state electrolyte, but also a "gel polymer electrolyte" in which an electrolyte solution is included in a polymer-based electrolyte. For example, the gel polymer electrolyte may be in a form obtained by swelling an electrolyte solution after preparing a polymer matrix (physical gel) or a form prepared by curing a composition in which an electrolyte solution and a monomer are mixed (chemical gel), depending on the preparation method.

A solid electrolyte may be divided into an oxide-based electrolyte, a sulfide-based electrolyte, a polymer-based electrolyte, and the like, and among them, a polymer-based solid electrolyte is relatively economically excellent, but may lack ion conduction properties and mechanical properties. In order to solve the problem, according to an embodiment, a composite electrolyte in which a polymer and inorganic particles are mixed may be applied. However, since the ion conduction properties and the mechanical properties of the polymer-based solid electrolyte may be in a trade-off relationship with each other, it may be difficult to improve both of them.

Specifically, when a composite electrolyte in which a polymer and inorganic particles are mixed is prepared, polyethylene oxide (PEO), polymethyl methacrylate (PMMA), polyvinylidene fluoride (PVDF), and the like may be applied as a polymer material. However, the composite electrolyte to which polyethylene oxide (PEO) is applied relatively lacks mechanical properties, moldability, and the like, and may not be appropriate for high voltage. In addition, since the composite electrolyte to which polymethyl methacrylate (PMMA) is applied has brittle properties and lacks ion conduction properties, processability, and the like, it may be inappropriate for practical use. In addition, it may be difficult to actually use the composite electrolyte to which polyvinylidene fluoride (PVDF) is applied due to a side reaction on an interface caused by low ion conductivity and defluorination.

As such, the polymer used in the composite electrolyte requires appropriate ability to dissociate a lithium salt, excellent moldability/processability, and the like, as well as excellent ion conduction properties, and should have no side reaction with inorganic particles and have excellent contactability with an electrode.

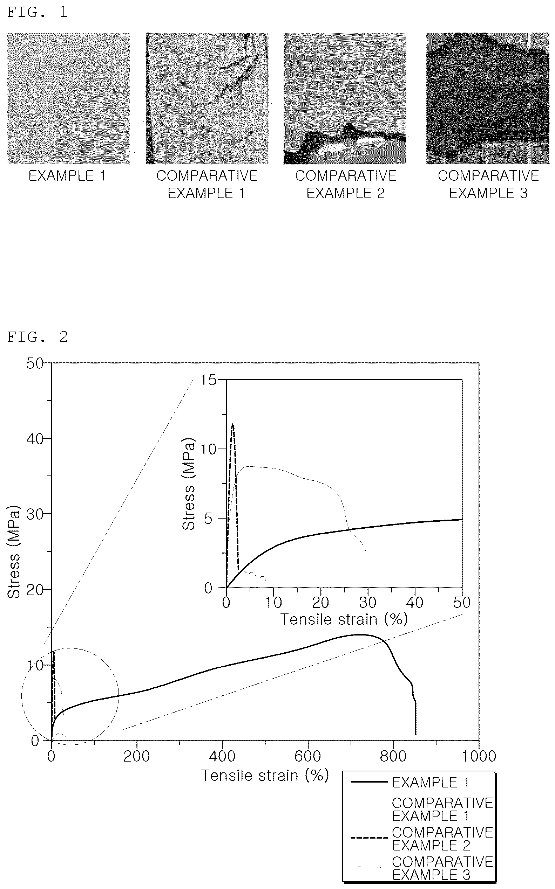

According to an embodiment of the present disclosure, a composite electrolyte including inorganic particles having excellent conductivity to lithium ions and an ionic conductive polymer may be prepared, in which the composite electrolyte may have excellent performance by the ionic conductive polymer including a polyurethane (PU)-based compound having excellent in all of stretchability, resilience, mechanical/chemical stability, processability, and the like. Referring to FIGS. 1 to 6, a detailed description will be disclosed hereinbelow.
FIG. 1 is drawings showing the forms of the composite membranes for an electrolyte according to Example 1 and Comparative Examples 1 to 3.
FIG. 2 is a drawing illustrating stress-strain curves obtained by measuring the composite membranes for an electrolyte according to Example 1 and Comparative Examples 1 to 3.

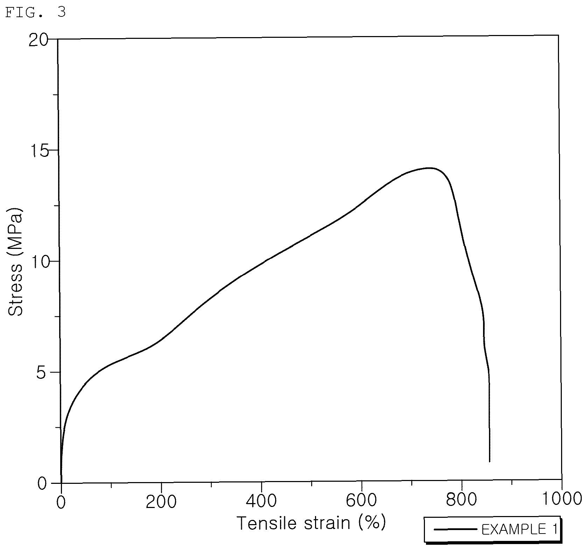

FIG. 3 is a drawing illustrating a stress-strain curve obtained by measuring the composite membrane for an electrolyte according to Example 1.

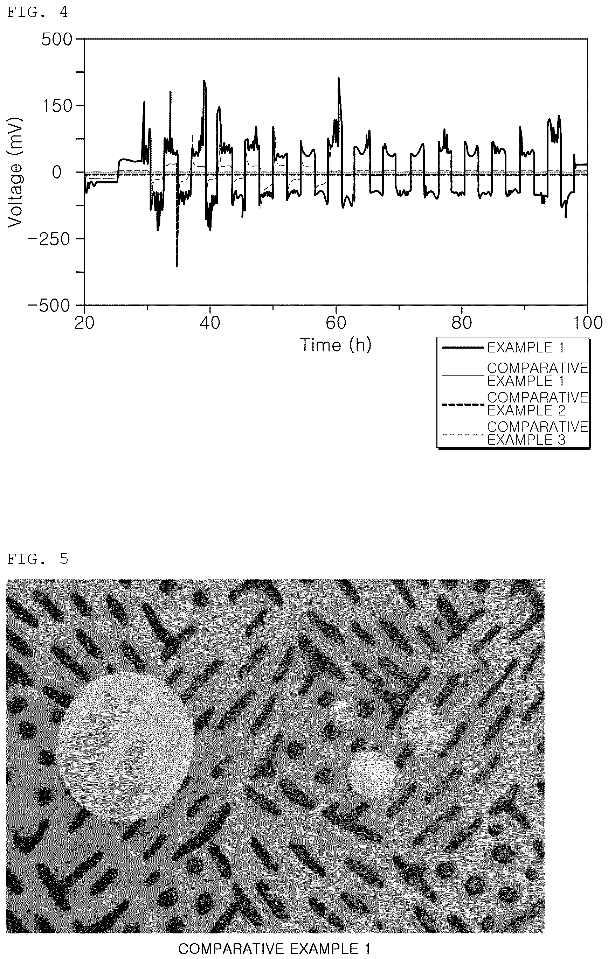

FIG. 4 is a drawing illustrating the results of measuring voltage over time in a charge/discharge process of lithium secondary batteries including the composite electrolytes according to Example 1 and Comparative Examples 1 to 3.
FIG. 5 is a drawing illustrating forms before/after liquid electrolyte impregnation of the composite membrane for an electrolyte according to Comparative Example 1.

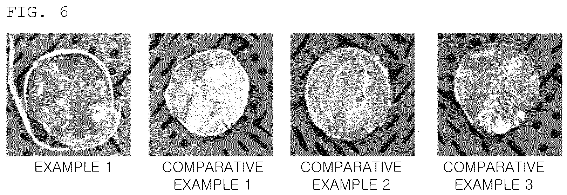

FIG. 6 is drawings showing the results of post-lithium surface analysis and electrolyte layer check after charging/discharging lithium secondary batteries including the composite electrolytes according to Example 1 and Comparative Examples 1 to 3.

### Composite membrane for electrolyte

The composite membrane for an electrolyte according to an embodiment includes: an ionic conductive polymer and inorganic particles, wherein the ionic conductive polymer includes a polyurethane-based compound, and the composite membrane for an electrolyte has an elongation at break of 50% or more.

The composite membrane for an electrolyte is a film-shaped composite membrane which may be used in the preparation of the composite electrolyte, and includes an ionic conductive polymer and inorganic particles. Specifically, the ionic conductive polymer includes a polyurethane-based compound, and the polyurethane-based compound may be polyurethane, which is a polymer including a urethane bond (-NHCOO-); or a copolymer obtained by copolymerizing polyurethane with other polymers. As described above, polyurethane is excellent in chemical/mechanical stability, ion conductivity, and the like, has high stretchability/resilience to have excellent moldability and the like, may appropriately dissociate a lithium salt to swell a liquid electrolyte inside, also has high adhesiveness to an electrode rather than a conventional composite electrolyte, and thus, has excellent usability as a composite electrolyte. Hereinafter, a polyurethane-based compound will be described in more detail.

### <Polyurethane-based compound>

The number of functional groups capable of hydrogen bonding per structural unit of the polyurethane-based compound may be 2 to 18. Specifically, the number of functional groups capable of hydrogen bonding per structural unit of the polyurethane-based compound may be 4 or more or 16 or less. When the number of functional groups capable of hydrogen bonding per structural unit of the polyurethane-based compound is within the range, elasticity, resilience, and stretchability may be excellent. The number of functional groups capable of hydrogen bonding per structural unit of the polyurethane-based compound may be calculated by performing nuclear magnetic resonance spectroscopy (NMR) and Fourier transform infrared spectroscopy (FT-IR) on a polyurethane-based compound to analyze a repeating unit structure and measuring the number of oxygen and nitrogen molecules included in the repeating unit structure.

The polyurethane-based compound may include a soft-segment and a hard-segment. Herein, the soft-segment may include an aliphatic organic group, specifically, may include a structural unit represented by the following Chemical Formula 1, and more specifically, may be derived from a polyol compound including an aliphatic organic group. The hard-segment may include an aromatic ring, may include a structural unit represented by the following Chemical Formula 2, and more specifically, may be derived from a diisocyanate compound including an aromatic ring:

[Chemical Formula 1] *-O-R¹-O-*

wherein R¹ is a divalent aliphatic organic group.

[Chemical Formula 2] *-C(=O)(NR³)-R²-(NR⁴)C(=O)-*

wherein R² is an organic group including an aromatic ring, and
R³ and R⁴ are independently of each other hydrogen or a substituted or unsubstituted alkyl group having 1 to 5 carbon atoms. In Chemical Formula 1, R¹ may be a residue including a branched or linear acyclic aliphatic divalent organic group having 2 to 40 carbon atoms. Herein, the divalent aliphatic organic group may have a substituted or unsubstituted structure. Specifically, R¹ may be a substituted or unsubstituted alkyl group having 2 to 40 carbon atoms, and the alkyl group may include an ester group, an ether group, a carbonate group, and the like at both ends.

In Chemical Formula 2, R² may be an organic group including an aromatic ring having 6 to 15 carbon atoms. Herein, the organic group including the aromatic ring may have a substituted or unsubstituted structure. Specifically, R² may be, for example, a phenylene group, a toluene group, a xylene group, or a naphthalene group as an organic group including only an aromatic ring, and may be, for example, diphenylmethane as the organic group including an aromatic ring at both ends as the substituted or unsubstituted alkyl group having 1 to 5 carbon atoms.

In addition, the soft-segment is derived from a polyol compound having a hydroxyl group (-OH) at both ends and may be a moiety having low polarity. In addition, the hard-segment is derived from a diisocyanate compound having an isocyanate group (-N=C=O) at both ends and may be a moiety including a reactor (-NH-) capable of hydrogen bonding.

The polyol compound may be represented by the following Chemical Formula 1-1:

[Chemical Formula 1-1] HO-R¹-OH

wherein R¹ is a moiety including a divalent aliphatic organic group.

R¹ has the same meaning as R¹ of Chemical Formula 1, and since the detailed description thereof overlaps the above description, it will be omitted.

For example, the polyol compound may include any one selected from polyester polyol, polyether polyol, polycarbonate polyol, polycaprolactone polyol, and a combination thereof, but is not limited thereto.

The diisocyanate compound may be represented by the following Chemical Formula 2-1:

[Chemical Formula 2-1] OCN-R²-NCO

wherein R² is an aromatic ring.

R² has the same meaning as R² of Chemical Formula 2, and since the detailed description thereof overlaps the above description, it will be omitted.

For example, the diisocyanate compound may be any one selected from methylene diphenyl diisocyanate (MDI), phenylene diisocyanate (PDI), toluene diisocyanate (TDI), xylene diisocyanate (XDI), naphthalene diisocyanate (NDI), and a combination thereof, but is not limited thereto.

The ionic conductive polymer may further include any one selected from a polyethylene oxide (PEO)-based compound, a polyvinylidene fluoride (PVDF)-based compound, a polymethyl methacrylate (PMMA)-based compound, and a combination thereof. The ionic conductive polymer according to an embodiment may further include any one selected from a polyethylene oxide (PEO)-based compound, a polyvinylidene fluoride (PVDF)-based compound, a polymethyl methacrylate (PMMA)-based compound, and a combination thereof, in addition to the polyurethane-based compound. In the polyethylene oxide (PEO)-based compound, the polyvinylidene fluoride (PVDF)-based compound, and the polymethyl methacrylate (PMMA)-based compound, "...-based compound" refers to any one selected from a polymer including..., a copolymer thereof, or a combination thereof, as described above with regard to the polyurethane-based compound. Hereinafter, the inorganic particle will be described in more detail.

### <Inorganic particles>

The inorganic particles are oxide particles including a lithium element, and specifically, may be a lithium conductive oxide-based particle. The lithium conductive oxide-based particles are compound particles including an oxygen element and having conductivity to a lithium ion, may have a powdered form, may be a lithium conductive oxide-based particle including at least one of other metal elements such as zirconium (Zr), phosphate (PO₄), and titanium (Ti) in addition to a lithium element, and may include two or more oxide particles.

According to an embodiment, the inorganic particles may include any one selected from a garnet compound, a NASICON compound, a perovskite compound, and a combination thereof. The inorganic particles are an inorganic material in a particle form having conductivity to a lithium ion and may contribute to improving both ion conductivity and mechanical properties of the composite electrolyte.

The garnet compound is a compound having a garnet crystal structure or garnet-like crystal structure, including lithium, lanthanum, zirconium, and oxygen, and may be an oxide represented by the chemical formula of Li_{7-3x+y-z}AₓLa_{3-y}B_{y}Zr_{2-z}M_{z}O₁₂. In the chemical formula, 0≤x≤1, 0≤y≤1, and 0≤z≤1, A may be a Li-substituted doping element, B may be a La-substituted doping element, M may be a Zr-substituted doping element, and A and B may be at least any one selected from the group consisting of aluminum (Al), gallium (Ga), barium (Ba), magnesium (Mg), calcium (Ca), strontium (Sr), potassium (K), cerium (Ce), and rubidium (Rb). In addition, M may be at least any one selected from the group consisting of molybdenum (Mo), tungsten (W), antimony (Sb), yttrium (Y), niobium (Nb), and tantalum (Ta). The garnet-type oxide is not limited thereto, but may be, for example, Li₇La₃Zr₂O₁₂, Li₅La₃Nb₂O₁₂, Li₅La₃Ta₂O₁₂, or Li₆La₂BaTa₂O₁₂.

It may be a lithium lanthanum zirconium oxide (LLZO)-based compound represented by the chemical formulas of Li₇La₃Zr₂O₁₂. The garnet compound such as the lithium lanthanum zirconium oxide (LLZO)-based compound may be a compound doped with a metal such as aluminum (Al) and tantalum (Ta).

The NASICON compound is a compound having a NASICON crystal structure of a NASICON-like crystal structure, and may be, for example, at least one selected from the group consisting of AGP (Li₁₊ₓAlₓGe₂₋ₓ(PO₄)3(0≤x≤1)), LATP (Li₁₊ₓAlₓTi₂₋ₓ(PO₄)₃(0≤x≤1)), and LZP (Li₁₊₄xZr₂₋ₓ(PO₄)₃(0≤x≤0.4)).

The perovskite compound is a compound having a perovskite crystal structure or a perovskite-like crystal structure, and may be, for example, a lithium lanthanum titanate oxide (LLTO)-based compound represented by the chemical formula of Li_{0.31}La_{0.56}TiO₃ and the like; or lithium lanthanum niobate (LiₓLa_{(1-x)/3}NbO₃)(0≤x≤1).

The inorganic particle may include one or more selected from zirconium (Zr), phosphate (PO₄), and titanium (Ti). Specifically, the lithium conductive oxide-based particle 21 may be a compound of one or more selected from a lithium lanthanum zirconium oxide (LLZO)-based compound, a lithium lanthanum titanate oxide (LLTO)-based compound, a lithium aluminum germanium phosphate (LAGP)-based compound, and a lithium aluminum titanium phosphate (LATP)-based compound. More specifically, the lithium conductive oxide-based particle 21 is represented by the chemical formula of Li₇La₃Zr₂O₁₂, and may be a lithium lanthanum zirconium oxide (LLZO)-based compound having a garnet structure. When the compound of the above type, specifically a LLZO-based compound is applied as the inorganic particles, a composite electrolyte having characteristics such as excellent ion conductivity, stability with a lithium metal, and a broad potential window range may be prepared.

The composite membrane for an electrolyte has an elongation at break of 50% or more and has excellent stretchability, resilience, and elasticity. Specifically, the composite membrane for an electrolyte may have an elongation at break of 100% or more, 300% or more, or 500% or more and 2000% or less or 1000% or less. The elongation at break may be an elongation (tensile strain) at the time of necking after a stress-strain curve of a composite membrane for an electrolyte is measured using UTM equipment. The necking point may be a point at which stress is lowered in the stress-strain curve. When the elongation at break of the composite membrane for an electrolyte is within the range described above, the stretchability, resilience, elasticity, and the like of the finally prepared composite electrolyte are excellent, so that lithium dendrite formed in the charge/discharge process of the battery has excellent reversibility to return to its original state and formation of lithium dendrite is effectively suppressed, and thus, characteristics such as battery safety may also be excellent.

### <Composite electrolyte>

The composite electrolyte according to an embodiment includes: the composite membrane for an electrolyte according to any one of the above embodiments; an acryl-based compound, and a liquid electrolyte. Specifically, the composite electrolyte has a structure in which a liquid electrolyte applied to a gel-polymer electrolyte is impregnated into the composite membrane for an electrolyte described above, and may have excellent electrochemical performance, mechanical properties, processability, and the like by including an acryl-based compound as a crosslinked polymer.

The acryl-based compound may include a compound including a (meth)acryloyl group as a polymerizable group, and the acryl-based compound may include a compound having 3 to 8, specifically 3 to 6, and more specifically 3 or 4 (meth)acryloyl groups per molecule.

The acryl-based compound may include any one selected from trimethylol propane ethoxylated triacrylate (TMPETA), trimethylol propane trimethacrylate (TMPTMA), trimethylol propane triacrylate (TMPTA), tetramethylol methane tetraacrylate (TMMTA), and a combination thereof. When the composite electrolyte includes the acryl-based compound described above, chemical resistant stability, temperature stability, and heat resistance may be excellent, and may be favorable for controlling the characteristics of the constituent components by a functional group having excellent copolymerization properties. In addition, in the process of impregnating with a liquid electrolyte applied to the gel-polymer electrolyte and gelling, radical polymerization may be easily performed without a by-product.

The liquid electrolyte may include a lithium salt and a carbonate-based solvent. As the lithium salt, one or two or more of lithium bis(fluorosulfonyl)imide (LiFSI), lithium bis(trifluoromethanesulfonyl)imide (LiTFSI), lithium fluoride (LiF), lithium hexafluorophosphate (LiPF₆), lithium tetrafluoroborate (LiBF4), lithium trifluoromethanesulfonate (LiCF₃SO₃), lithium hexafluoroarsenate (LiAsF₆), lithium perchlorate (LiClO₄), lithium difluoro(oxalato)borate (LiDFOB) may be appropriately used.

As the carbonate-based solvent, one or two or more linear carbonate and non-linear (or cyclic) carbonate may be appropriately used. For example, the linear carbonate may be any one selected from dimethyl carbonate (DMC), diethyl carbonate (DEC), and the like, and the non-linear carbonate may be at least any one selected from ethylene carbonate (EC), propylene carbonate (PC), fluoroethylene carbonate (FEC), and the like. When the liquid electrolyte includes the lithium salt and the carbonate-based solvent of the type described above, the corresponding salts and the solvent may form a stable SEI on an interface of an anode (Li) interface of a lithium metal anode (LMA) and the cell characteristics of a lithium metal battery may be excellent.

According to an embodiment, the carbonate-based solvent may include three types of non-linear carbonate. Specifically, the carbonate-based solvent may include ethylene carbonate (EC), propylene carbonate (PC), and fluoroethylene carbonate (FEC) as the three types. Ethylene carbonate (EC) has high polarity and excellent ability to dissociate a lithium salt and may form a stable anode SEI layer, but when used alone in a solid state at room temperature, has relatively low ion conductivity. However, propylene carbonate (PC) has lower polarity than ethylene carbonate (EC), but is present as a liquid state at room temperature, and an electrolyte solution having high ion conductivity in a liquid state may be prepared when mixing propylene carbonate (PC) and ethylene carbonate (EC). In addition, fluoroethylene carbonate (FEC) may form an anode SEI abundant in Li-F having excellent ion conduction properties and durability due to a structure including fluorine (F), and thus, may contribute to the implementation of a stable life of an anode. However, when left at room temperature for a long time, its structure is deformed, and thus, it is difficult to use it as a main solvent.

Therefore, when the carbonate-based solvent includes a mixture of three types of ethylene carbonate (EC), propylene carbonate (PC), and fluoroethylene carbonate (FEC), the benefits of the carbon-based solvent described above are greatly increased while the disadvantages thereof complement each other, thereby preparing an electrolyte which allows high ion conductivity to be secured and stable anode SEI to be formed.

A content of the ionic conductive polymer in the composite electrolyte may be 10 to 70 wt%. Specifically, the content of the ionic conductive polymer in the composite electrolyte may be 20 wt% or more or 40 wt% or more and 50 wt% or less.

A content of the inorganic particles in the composite electrolyte may be 1 to 20 wt%. Specifically, the content of the inorganic particles in the composite electrolyte may be 2.5 wt% or more or 4 wt% or more and 10 wt% or less or 5 wt% or less.

A weight ratio between the ionic conductive polymer and the inorganic particles in the composite electrolyte may be 1:1 to 30:1. Specifically, the weight ratio between the ionic conductive polymer in the composite electrolyte and the inorganic particles may be 3:1 to 25:1 or 10:1 to 20:1.

When the content of the ionic conductive polymer is excessively low and the content of the inorganic particles is excessively high, the elongation of the electrolyte may be lowered, it may be difficult to maintain a free-standing film form, ion conductivity may be low, and electrolyte breakdown may occur due to the brittle properties of an inorganic material. In addition, when the content of the ionic conductive polymer is excessively high and the content of the inorganic particles is excessively low, it may be substantially difficult to achieve the effect of improving mechanical properties by adding the inorganic particles.

Therefore, when the contents and the ratios of the ionic conductive polymer and the inorganic particles are appropriately adjusted to the range described above, the stretchability of the electrolyte, a shear modulus, and the like may all be excellent.

A content of the acryl-based compound in the composite electrolyte may be 1 to 10 wt%. Specifically, the content of the acryl-based compound in the composite electrolyte may be 2 wt% or more or 3 wt% or more and 7 wt% or less or 5 wt% or less.

A content of the liquid electrolyte in the composite electrolyte may be 10 to 70 wt%. Specifically, the content of the liquid electrolyte in the composite electrolyte may be 20 wt% or more or 40 wt% or more and 50 wt% or less.

When the contents of the acryl-based compound and the liquid electrolyte are within the range described above, both the capacity and life characteristics of the battery may be excellent.

The composite electrolyte may further include an initiator. When the composite electrolyte further includes the initiator, gelation of the electrolyte may be performed more easily, a polymer network may be sufficiently formed without premature polymerization or overpolymerization, and thus, mechanical strength may be further improved. The type of initiator is not particularly limited, and for example, may be tert-butylperoxy pivalate (T-bpp), benzoyl peroxide (BPO), azobisisobutyronitrile (AIBN), and the like. When the composite electrolyte further includes the initiator, the content of the initiator in the composite electrolyte may be 0.01 to 5 wt%. Specifically, the content of the initiator in the composite electrolyte may be 0.1% or more and 1 wt% or less. When the content of the initiator is excessively high, the mechanical strength of the electrolyte may be rather deteriorated. Therefore, when the content of the initiator is within the range described above, gelation of the electrolyte may be performed more easily while the mechanical strength may also be secured to an excellent level.

The composite electrolyte may be a free-standing film. According to an embodiment, the composite electrolyte is a free-standing film or a self-supporting film, may have sufficient mechanical strength and be excellent in processability and the like without a separate external support elements such as a current collector or a support web, and may further improve the energy density of the battery including the electrolyte.

The composite electrolyte may have a thickness of 10 to 200 µm. Specifically, the composite electrolyte may have a thickness of 20 µm or more and 150 µm or less, 100 µm or less, 50 µm or less, or 40 µm or less.

The composite electrolyte may have an ion conductivity of 1.0x10⁻⁴ to 5.0×10⁻⁴ (S·cm⁻¹). Specifically, the composite electrolyte may have the ion conductivity of 1.5×10⁻⁴ (S·cm⁻¹) or more, 2.4×10⁻⁴ (S·cm⁻¹), or 3.0×10⁻⁴ (S·cm⁻¹) or more and 4.0×10⁻⁴ (S·cm⁻¹) or less. The ion conductivity value may be a value measured at room temperature (25°C). When the ion conductivity of the composite electrolyte is within the range described above, the ion conducting properties of the electrolyte may be better.

The preparation method of a composite electrolyte according to an embodiment includes: preparing a slurry including an ionic conductive polymer, inorganic particles, and an organic solvent; applying the slurry to a substrate and then drying to form a composite membrane for an electrolyte; and mixing the composite membrane for an electrolyte with an acryl-based compound and a liquid electrolyte and then performing curing to form a composite electrolyte, wherein the ionic conductive polymer includes a polyurethane-based compound.

The type of organic solvent is not particularly limited, and tetrahydrofuran (THF), dimethylformamide (DMF), and the like may be appropriately used.

The substrate is not particularly limited and may be an electrode such as an anode and a cathode or a release film. In addition, a technique of applying the slurry to a substrate is not particularly limited, and a method such as doctor blade and dip coating may be appropriately applied.

A heat treatment temperature during drying of the slurry applied on the substrate may be 20 to 150°C and the treatment may be performed for 1 to 24 hours.

The heat treatment temperature during curing after mixing the composite membrane for an electrolyte with the acryl-based compound and the liquid electrolyte may be 50 to 100°C, and the treatment may be performed for 0.5 to 3 hours.

Since the detailed description of the ionic conductive polymer, the inorganic particles, the composite membrane for an electrolyte, the acryl-based compound, the liquid electrolyte, the composite electrolyte, and the like overlap the above description, it will be omitted.

### Lithium secondary battery

The lithium secondary battery according to an embodiment includes the composite electrolyte according to any one of the embodiments described above. Specifically, the lithium secondary battery may include a cathode, an anode, and an electrolyte disposed therebetween, and the electrolyte may be the composite electrolyte according to any one of the embodiments described above.

The cathode is not particularly limited. For example, the cathode may have a structure including a cathode current collector; and a cathode mixed layer formed on at least one surface of the cathode current collector, and the cathode mixed layer may include a cathode active material.

The cathode active material is not particularly limited, and may include lithium-transition metal oxides such as lithium cobalt oxide (LiCoO₂), lithium manganese oxide (LiMn₂O₄), or lithium nickel oxide (LiNiO₂), or a lithium-transition metal composite oxide in which a part of the transition metals is substituted with other transition metals.

Specifically, the cathode active material may be an NCM-based cathode active material represented by the following Chemical Formula 3; or a LLO (Li rich layered oxides, over lithiated oxides, over-lithiated layered oxide, OLO, LLOs)-based cathode active material:

[Chemical Formula 3] LiₐNi_{b}M_{1-b}O₂

wherein 0.9≤a≤1.2, b≥0.5, and M is at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, and Zr.

Specifically, in Chemical Formula 1, 0.95≤a≤1.08, and b may be 0.6 or more, 0.8 or more, more than 0.8, 0.9 or more, or 0.98 or more.

Specifically, in Chemical Formula 3, M may include Co, Mn, or Al, more specifically, M may include Co and Mn, and optionally, further include Al.

[Chemical Formula 4] Li₁₊ₓM₁₋ₓO₂

wherein 0≤x≤0.4, and M is at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba, and Zr.

Specifically, in Chemical Formula 4, M may include Ni, Co, Mn, or Al, more specifically may include Ni, Co, and Mn, and optionally further include Al.

In addition, the cathode active material may be a lithium iron phosphate (LFP)-based cathode active material represented by the chemical formula LiFePO₄.

In addition, the lithium-transition metal oxide may be a secondary particle substantially formed into one particle by assembling or aggregating a plurality of primary particles, or in a single particle form. The single particle form may mean exclusion of secondary particles substantially formed into one particle by assembling or aggregating a plurality of primary particles (for example, more than 10). However, the single particle form does not exclude having substantially a single body form by adhering or closely adhering 2 to 10 single particles to each other. In some example embodiments, the cathode active material may include both a secondary particle form and a single particle form.

The components of the cathode current collector are not particularly limited, and a plate, a foil, and the like formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used.

The cathode mixed layer may further include a binder. The binder may include, for example, one or two or more of polyvinylidene fluoride, styrene butadiene rubber (SBR), polytetrafluoroethylene, polyvinylidene fluoride, vinylidene fluoride/hexafluoropropylene copolymer, polyacrylonitrile, polymethyl methacrylate, and the like.

The cathode mixed layer may further include a conducting material. The conducting material may include, for example, one or two or more of graphite such as natural graphite or artificial graphite; carbon-based materials such as carbon black, acetylene black, ketjen black, channel black, furnace black, lamp black, thermal black, carbon fiber, and carbon nanotubes (CNT); metal powder or metal fiber such as copper, nickel, aluminum, and silver; conductive whisker such as zinc oxide and potassium titanate; conductive metal oxides such as titanium oxide; conductive polymers such as a polyphenylene derivative, and the like.

The anode is not particularly limited. For example, the anode may have a structure including an anode current collector; and an anode mixed layer formed on at least one surface of the anode current collector.

The components of the anode current collector is not particularly limited, and a plate, a foil, and the like formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used.

The anode mixed layer may include a carbon-based active material such as artificial graphite and natural graphite, a silicon-based active material such as silicon oxide (SiOₓ; 0<x<2) and a Si-C composite, and a metal such as a lithium metal, as an anode active material. According to an embodiment, the anode mixed layer may have a pure silicon structure substantially including only a silicon-based active material as an anode active material.

The anode mixed layer may further include a binder. The binder may include, for example, one or two or more of styrene butadiene rubber (SBR), polytetrafluoroethylene, polyvinylidene fluoride, polyethylene, vinylidene fluoride/hexafluoropropylene copolymer, polyacrylonitrile, polymethyl methacrylate, and the like.

The anode mixed layer may further include a conducting material. The conducting material may include, for example, one or two or more of graphite such as natural graphite or artificial graphite; carbon-based materials such as carbon black, acetylene black, ketjen black, channel black, furnace black, lamp black, thermal black, carbon fiber, and carbon nanotubes (CNT); metal powder or metal fiber such as copper, nickel, aluminum, and silver; conductive whisker such as zinc oxide and potassium titanate; conductive metal oxides such as titanium oxide; conductive polymers such as a polyphenylene derivative, and the like.

The lithium secondary battery may further include a lithium metal anode (LMA). Specifically, the lithium metal anode (LMA) may have an anodeless structure including a lithium metal layer containing a lithium metal or an alloy thereof. Herein, the lithium metal anode (LMA) may have a structure further including a separate anode current collector or a structure which does not include the separate anode current collector. In addition, the lithium metal layer may have a structure in which a separate protective layer is formed on at least one surface.

When the lithium secondary battery including the composite electrolyte described above has a structure including the lithium metal anode (LMA) as an anode, the growth of dendrite may be effectively suppressed due to excellent stretchability and resilience.

### Mode for Invention

### Examples

### 1. Preparation of composite electrolyte

### 1) Example 1

### (1) Composite membrane for electrolyte

An organic solvent (tetrahydrofuran; THF), an ionic conductive polymer (polyurethane; PU), and inorganic particles (Li₇La₃Zr₂O₁₂; LLZO) were mixed, and then stirred for 12 hours to prepare a slurry. At this time, a weight ratio between the organic solvent and the ionic conductive polymer in the slurry was 80:20, and a weight ratio between the ionic conductive polymer and the ionic conductive inorganic material was 10:1.

The slurry prepared as described above was cast on a glass substrate by a doctor blade technique and dried at room temperature to 70°C for 24 hours to prepare a composite membrane for an electrolyte. The shape of the prepared composite membrane for an electrolyte of Example 1 is as shown in FIG. 1.

### (2) Composite electrolyte

A liquid electrolyte, an acryl-based compound, and an initiator were mixed on the composite membrane for an electrolyte prepared as described above and cured at 70°C for 1 hour to prepare a composite electrolyte. At this time, a liquid electrolyte having a composition of 0.8 M LiFSI + 0.2 M LiDFOB + EC/PC/FEC (v/v 1/1/1) was applied as a liquid electrolyte, trimethylolpropane ethoxylated triacrylate (TMPETA) was applied as an acryl-based compound, and a pivalate-based initiator (tert-butylperoxy pivalate; T-bpp) was applied as an initiator.

The content of each component included in the finally prepared composite electrolyte is shown in the following Table 1. In the following Table 1, THF refers to tetrahydrofuran, DMF refers to dimethyl formamide, PU refers to polyurethane, PEO refers to polyethylene oxide, PMMA refers to polymethyl methacrylate, and PVDF refers to polyvinylidene difluoride.

### 2) Comparative Examples 1 to 3

The composite electrolytes of Comparative Examples 1 to 3 were prepared in the same manner as in Example 1, except that different types of organic solvents and ionic conductive polymer were applied. The types of organic solvents and ionic conductive polymer applied to Comparative Examples 1 to 3 and the content of each component are as shown in the following Table 1. In addition, the forms before and after impregnating the composite membrane for an electrolyte of Comparative Example 1 with the liquid electrolyte are as shown in FIG. 5.

**[Table 1]**

| Classification | Type of organic solvent | Type of polymer | Contents of composite electrolyte component (wt%) | | | | | |
|---|---|---|---|---|---|---|---|---|
| | | | Ion conductive polymer (A) | Inorganic particles (B) | A:B | Liquid electr olyte | Acryl-based polymer | Initiator |
| Example 1 | THF | PU | 44.36 | 4.44 | 10:1 | 47.32 | 3.84 | 0.04 |
| Comparative Example 1 | THF | PEO | 44.36 | 4.44 | 10:1 | 47.32 | 3.84 | 0.04 |
| Comparative Example 2 | THF | PMMA | 44.36 | 4.44 | 10:1 | 47.32 | 3.84 | 0.04 |
| Comparative Example 3 | DMF | PVDF | 44.36 | 4.44 | 10:1 | 47.32 | 3.84 | 0.04 |

### 2. Performance evaluation

### 1) Composite membrane for electrolyte

### (1) Dispersibility/ chemical resistance/ film formability/ stretchability

### A. Dispersibility

The slurry of the composite membrane for an electrolyte prepared as described above was stirred and stored overnight, the dispersibility was evaluated with the naked eye, and if the slurry was appropriately dispersed, it was marked with o, and if not, it was marked with ×, and the results are shown in the following Table 2.

### B. Chemical resistance

The composite membrane for an electrolyte prepared as described above was observed with the naked eye, chemical resistance was evaluated depending on the color, and the results are shown in the following Table 2. At this time, if the composite membrane for an electrolyte chemically reacted with an oxide and was colored, it was marked with ×, and if not, it was marked with o.

### C. Film formability

The film formability was evaluated in the process of preparing the composite membrane for an electrolyte by casting and drying the slurry prepared as described above, and the results are shown in the following Table 2. At this time, if there were cracks on the composite membrane for an electrolyte or a condensation phenomenon occurred, it was marked with ×, and if not, it was marked with o.

### D. Stretchability

The composite membrane for an electrolyte prepared as described above was pulled by hand, the stretchability was evaluated by the naked eye, and the results are shown in the following Table 2. At this time, if the pulled composite membrane was appropriately stretched, it was marked with ∘, and if not, it was marked with ×.

**[Table 2]**

| Classification | Dispersibility | Chemical resistance | Film formability | Stretchability |
|---|---|---|---|---|
| Example 1 | ○ | ○ | ○ | ○ |
| Comparative Example 1 | ○ | ○ | ○ | × |
| Comparative Example 2 | ○ | ○ | ○ | × |
| Comparative Example 3 | × | × | ○ | × |

### (2) Elongation at break and rupture stress

The stress-strain curve of the composite membrane for an electrolyte prepared as described above was measured using UTM equipment (see FIGS. 2 and 3), the tensile strain and stress values at the time of necking were determined as the elongation at break and the rupture stress, respectively, and the measured results are shown in the following Table 3.

### 2) Composite electrolyte

### (1) Manufacture of a symmetric cell

In order to evaluate the electrochemical performance of the composite electrolyte prepared as described above, a symmetric cell including the composite electrolyte was manufactured. Specifically, as a symmetric cell using a lithium metal as a working electrode and a counter electrode in which these electrodes were disposed at both sides, a lithium metal battery sample including the composite electrolyte prepared as described above as the electrolyte between both electrodes was manufactured.

### (2) Electrodeposition/deposition properties

The charge/discharge characteristics of Example 1 and Comparative Examples 1 to 3 were evaluated, among the samples prepared as described above. Specifically, a lithium metal battery sample was subjected to a charge/discharge cycle under the conditions of a capacity of 2 mAh per area and a current density of 1 mA per area at 25°C to measure a voltage of a battery over time, and if the voltage of the battery was maintained at 0 V after 60 hours, it was determined to be occurrence of battery short circuit within 60 hours and marked with ×, and if not, it was marked with ∘, and the results are shown in the following Table 3.

### (3) Ion conductivity

The ion conductivity of Example 1 and Comparative Examples 1 to 3 was evaluated using EIS analysis, among the samples prepared as described above. Specifically, the ion conductivity of the lithium metal battery sample was measured at room temperature (25°C), and the results are shown in the following Table 3.

**[Table 3]**

| Classification | Composite membrane for electrolyte | | Composite electrolyte | |
|---|---|---|---|---|
| | Elongation at break (%) | Rupture stress (MPa) | Electrodeposition/deposition characteristics | Ion conductivity (S ·cm⁻¹) |
| Example 1 | 700 | 15 | ○ | 3.2×10⁻⁴ |
| Comparative Example 1 | 6 | 8 | × (short circuit) | 2.0×10⁻⁴ |
| Comparative Example 2 | 2 | 12 | × (short circuit) | 1.9×10⁻⁴ |
| Comparative Example 3 | 4 | 1 | × (short circuit) | 2.3×10⁻⁴ |

Referring to Tables 1 to 3, it was shown that the stretchability and the elongation at break of the composite membranes for an electrolyte of Comparative Examples 1 to 3 including polyethylene oxide (PEO), polymethyl methacrylate (PMMA), and polyvinylidene difluoride (PVDF), respectively, as the ionic conductive polymer were relatively poor. In particular, it was shown that Comparative Example 3 including polyvinylidene difluoride (PVDF) as the ionic conductive polymer also had poor dispersibility and chemical resistance. However, it was shown that the composite membrane for an electrolyte according to Example 1 including polyurethane (PU) as the ionic conductive polymer was excellent in all of dispersibility, chemical resistance, film formability, stretchability, and elongation at break. In addition, it was shown that the composite electrolyte according to Example 1 including polyurethane (PU) and the ionic conductive polymer was excellent in both electrodeposition/deposition characteristics and ion conducting properties, while the composite electrolytes according to Comparative Examples 1 to 3 had battery short circuit within 60 hours during battery charging/discharging and had poor electrodeposition/deposition characteristics.

Meanwhile, it was shown that in Comparative Examples 1 to 3, the shape, color, and the like of the composite membranes for an electrolyte were inappropriately formed, unlike Example 1 (see FIG. 1), and in Comparative Example 1, the composite membrane for an electrolyte was dissolved during impregnation with the liquid electrolyte, and the shape was not maintained and gelation was not appropriately performed (see FIG. 5). In addition, it was shown that in Comparative Examples 1 to 3, the shape of the electrolyte layer on the surface of a lithium metal after charging/discharging was not appropriately maintained, unlike Example 1 (see FIG. 6).

Considering the results, it was determined that when the polyurethane-based compound was included as the ionic conductive polymer when preparing the composite electrolyte including the inorganic particles and the ionic conductive polymer, the composite electrolyte having improved ion conduction properties, processability, mechanical properties, and the like may be prepared with excellent processability.

While the embodiments of the present disclosure have been shown and described above in detail, the scope is not limited thereto, and it will be apparent to those skilled in the art that modifications and variations could be made without departing from the scope of the present disclosure as defined by the appended claims.

### Industrial Applicability

As described above, the features of the present disclosure may be applied to the composite membrane for an electrolyte, the composite electrolyte, the preparation method thereof, and the lithium secondary battery including the same, in whole or in part.

## Claims

1. A composite membrane for an electrolyte comprising an ionic conductive polymer and inorganic particles,
wherein the ionic conductive polymer includes a polyurethane-based compound, and
the composite membrane for an electrolyte has an elongation at break of 50% or more.

2. The composite membrane for an electrolyte of claim 1, wherein the number of functional groups capable of hydrogen bonding per structural unit of the polyurethane-based compound is 2 to 18.

3. The composite membrane for an electrolyte of claim 1, wherein the polyurethane-based compound includes a soft-segment and a hard-segment.

4. The composite membrane for an electrolyte of claim 3, wherein the soft-segment includes a structural unit represented by the following Chemical Formula 1:
[Chemical Formula 1] *-O-R¹-O-*
wherein R¹ is a divalent aliphatic organic group.

5. The composite membrane for an electrolyte of claim 3, wherein the hard-segment includes a structural unit represented by the following Chemical Formula 2:
[Chemical Formula 2] *-C(=O)(NR³)-R²-(NR⁴)C(=O)-*
wherein R² is an organic group including an aromatic ring, and
R³ and R⁴ are independently of each other hydrogen or a substituted or unsubstituted alkyl group having 1 to 5 carbon atoms.

6. The composite membrane for an electrolyte of claim 1, further comprising any one selected from a polyethylene oxide (PEO)-based compound, a polyvinylidene fluoride (PVDF)-based compound, a polymethyl methacrylate (PMMA)-based compound, and a combination thereof.

7. The composite membrane for an electrolyte of claim 1, wherein the inorganic particles include any one selected from a garnet compound, a NASICON compound, a perovskite compound, and a combination thereof.

8. A composite electrolyte comprising the composite membrane for an electrolyte of any one of claims 1 to 7; an acryl-based compound, and a liquid electrolyte.

9. The composite electrolyte of claim 8, wherein the acryl-based compound includes a compound having 3 to 8 (meth)acryloyl groups per molecule.

10. The composite electrolyte of claim 8, wherein the acryl-based compound includes any one selected from trimethylol propane ethoxylate triacrylate (TMPETA), trimethylol propane trimethacrylate (TMPTMA), trimethylol propane triacrylate (TMPTA), tetramethylol methane tetraacrylate (TMMTA), and a combination thereof.

11. The composite electrolyte of claim 8, wherein the liquid electrolyte includes a lithium salt and a carbonate-based solvent.

12. The composite electrolyte of claim 8, wherein a content of the ionic conductive polymer in the composite electrolyte is 10 to 70 wt%.

13. The composite electrolyte of claim 8, wherein a content of the inorganic particles in the composite electrolyte is 1 to 20 wt%.

14. The composite electrolyte of claim 8, wherein a weight ratio between the ionic conductive polymer and the inorganic particles in the composite electrolyte is 1:1 to 30:1.

15. The composite electrolyte of claim 8, wherein a content of the acryl-based compound in the composite electrolyte is 1 to 10 wt%.

16. The composite electrolyte of claim 8, wherein the composite electrolyte is a free-standing film.

17. The composite electrolyte of claim 8, wherein the composite electrolyte has a thickness of 10 to 200 µm.

18. A preparation method of a composite electrolyte, the method comprising:
preparing a slurry including an ionic conductive polymer, inorganic particles, and an organic solvent;
applying the slurry to a substrate and then drying to form a composite membrane for an electrolyte; and
mixing the composite membrane for an electrolyte with an acryl-based compound and a liquid electrolyte and then performing curing to form a composite electrolyte,
wherein the ionic conductive polymer includes a polyurethane-based compound.

19. A lithium secondary battery comprising the composite electrolyte of claim 8.

20. The lithium secondary battery of claim 19, wherein the lithium secondary battery includes a lithium metal anode (LMA).
